## Europäisches Patentamt

## European Patent Office

## Office européen des brevets

(11) Veröffentlichungsnummer: **0 140 305**
**A2**

# (12) EUROPÄISCHE PATENTANMELDUNG

(21) Anmeldenummer: **84112640.2**

(22) Anmeldetag: **19.10.84**

(51) Int. Cl.⁴: **G 03 B 21/00**

(30) Priorität: **21.10.83 DE 3338219**

(43) Veröffentlichungstag der Anmeldung:
**08.05.85 Patentblatt 85/19**

(84) Benannte Vertragsstaaten:
**AT FR GB IT**

(71) Anmelder: **Carl Braun Camera-Werk GmbH
Muggenhofer Strasse 122
D-8500 Nürnberg 80(DE)**

(72) Erfinder: **Braun, Carl, Jr.
Mörikestrasse 21
D-8500 Nürnberg 20(DE)**

(74) Vertreter: **Göbel, Matthias, Dipl.-Ing.
Pruppacher Hauptstrasse 5-7
D-8501 Pyrbaum-Pruppach(DE)**

(54) **Projektionseinrichtung.**

(57) Bei einer Projektionseinrichtung mit einem Diaprojektor und einem Bildbetrachter mit Umlenkspiegel und Mattscheibe, der für die Durchleitung der Projektionsstrahlen eine Durchführungsöffnung aufweist, ist zum platzsparenden Transport der Diaprojektor (1) über die Durchführungsöffnung (13) in das Gehäuse (8) des Bildbetrachters (5) einbringbar und die Durchführungsöffnung (13) durch ein Verschlußglied abdeckbar.

Fig. 1

PL.-ING. **M. GÖBEL**

**PATENTANWALT**

ZUGELASSENER VERTRETER
BEIM EUROPÄISCHEN PATENTAMT

8501 PYRBAUM-PRUPPACH
PRUPPACHER HAUPTSTRASSE
TELEFON 09180 / 678
TELEGRAMM GOEPATENT PYRBAUM
TELEX 624407 GOEPA

BANKKONTEN:
VOLKSBANK NÜRNBERG 45 233 BLZ 760 900 00
COMMERZBANK NÜRNBERG 8 300 907 BLZ 760 400 61

**0140305**

CARL BRAUN CAMERA-WERK GMBH, D 8500 NÜRNBERG 80

Projektionseinrichtung

Die Erfindung betrifft eine Projektionseinrichtung
mit einem Diaprojektor und einem Bildbetrachter mit
Umlenkspiegel und Mattscheibe, der für die Durchleitung der Projektionsstrahlen eine Durchführungsöffnung aufweist.

Es sind bereits Projektionseinrichtungen, bestehend
aus Diaprojektor und Bildbetrachter bekannt, die wahlweise die alleinige Verwendung des Diaprojektors oder
die gemeinsame Verwendung von Diaprojektor und Bildbetrachter ermöglichen. Zur gemeinsamen Verwendung
wird der Bildbetrachter vor dem Objektiv des Diaprojektors aufgestellt und über die Durchführungsöffnung
erfolgt der Bildwurf auf die Mattscheibe. Es sind
ferner Projektionseinrichtungen bekannt, bei denen
der Diaprojektor und der Bildbetrachter eine Baueinheit bilden und durch Schwenken eines Umlenkspie-gels
die Lichtstrahlen wahlweise auf die Mattscheibe oder
eine entfernte Bildfläche aufwerfbar sind. Während
die ersterwähnten Projektionseinrichtungen durch die
getrennte Ausbildung von Diaprojektor und Bildbetrachter Transportprobleme aufwerfen sowie umständlich zu
handhaben und platzaufwendig sind, zeichnen sich die

- 2 -

letzterwähnten Projektionseinrichtungen durch große Gehäuseausbildungen aus.

Es ist Aufgabe der Erfindung, eine Projektionseinrichtung mit einem Diaprojektor und Bildbetrachter zu schaffen, die zum Transport einen geringen Platzaufwand erfordert.

Der Erfindung gemäß hat diese Aufgabe dadurch eine Lösung gefunden, daß der Diaprojektor über die Durchführungsöffnung in das Gehäuse des Bildbetrachters einbringbar und die Durchführungsöffnung durch ein Verschlußglied abdeckbar ist. Zweckmäßig ist das Verschlußglied durch eine am Bildbetrachtergehäuse angelenkte Klappe gebildet und mit dem dem Gelenk abgewandten Ende am Bildbetrachtergehäuse verrastbar. Zusätzlich kann das Verschlußglied die Stellfläche für den Diaprojektor bilden. Zweckmäßig ist das Verschlußglied hierzu auf der dem Diaprojektor zugewandten Seite mit Stützansätzen für den Diaprojektor versehen, die dem sicheren Aufstellen des Diaprojektors dienen und einen Ausrichteffekt ausüben. Bei der so gebildeten Projektionseinrichtung bilden der Diaprojektor und der Bildbetrachter in der Ruhestellung eine platzsparende Einheit und nach Öffnen des Verschlußgliedes ist der Diaprojektor durch einen einfachen Verschiebevorgang aus dem Bildbetrachtergehäuse ausbringbar und in die Projektionsstellung überführbar.

Es versteht sich, daß der Diaprojektor entweder lose
vom Bildbetrachter aufgenommen werden kann oder gemäß bevorzugter Ausführung durch Führungszapfen in
bildbetrachtergehäusefeste Nuten verschieblich ist.
Die Nuten können einfach in den Seitenwandungen des
Bildbetrachters eingeformt oder eingearbeitet bzw.
durch im Abstand am Bildbetrachtergehäuse angeformte
Leistenpaare gebildet sein. Mittels der Führungszapfen
ist der Diaprojektor in vorbestimmten Ebenen im Bildbetrachter verschieblich gehalten. Zur Kennzeichnung
der Arbeitsstellung für den Diaprojektor bei gemeinsamer Benutzung können die Leistenpaare an dem der
Durchführungsöffnung näheren Ende Absetzungen aufweisen in die die Führungszapfen in der Art einer
Verrastung eingreifen.

Die Erfindung ist in der Zeichnung anhand eines Ausführungsbeispiels verdeutlicht.
Es zeigen:

Figur 1     eine Projektionseinrichtung in Ruhestellung
Figur 2     eine Projektionseinrichtung in Arbeitsstellung
            und

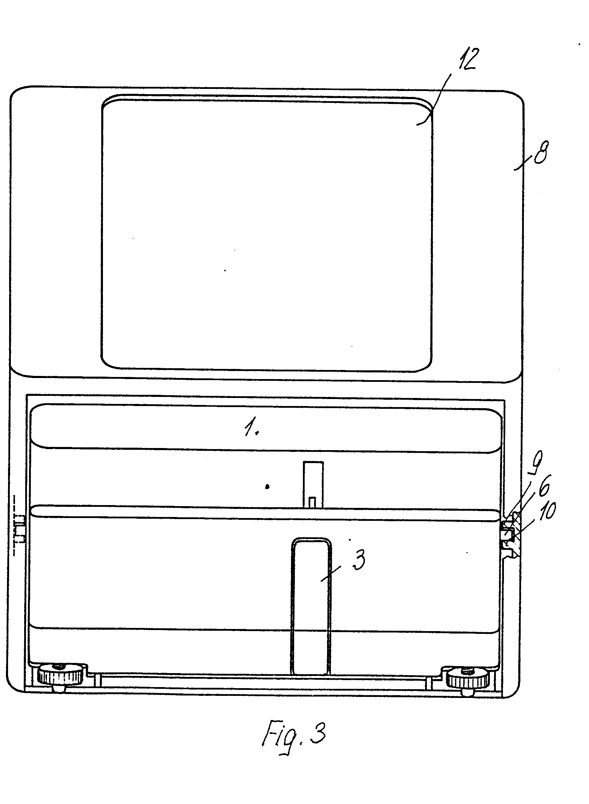

Figur 3     eine Projektionseinrichtung in Vorderansicht.

In den Figuren ist mit 1 ein Diaprojektor bezeichnet,
der einen Magazinführungskanal 2 aufweist, der durch
einen Diaschieber 3 zum Transport von Diapositiven
durchgriffen wird. Mit 4 ist ein Projektionsobjektiv
bezeichnet, das im Bereich einer Seitenwandung des
Projektors, insbesondere mittig angeordnet ist. Der

- 2 -

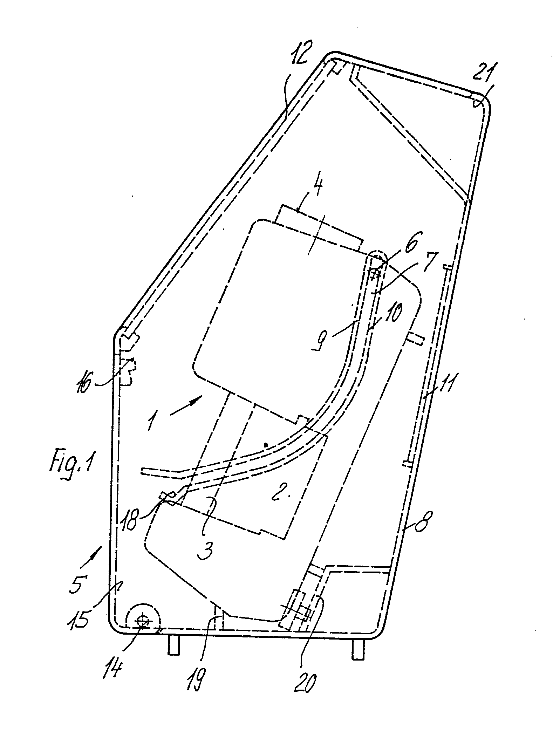

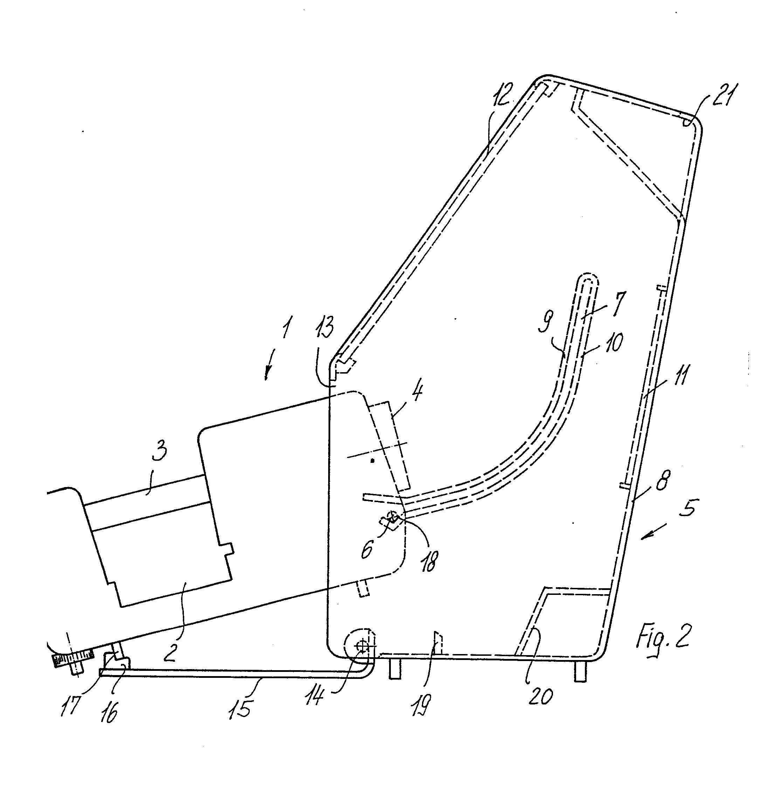

Diaprojektor 1 ist erfindungsgemäß in einen Bildbetrachter 5 einbringbar (Fig. 1) oder wahlweise
in die Projektionsstellung (Fig. 2) aufstellbar.
Der Diaprojektor 1 greift hierzu mit seitlichen Führungszapfen 6 in Kulissennuten 7 des Bildbetrachtergehäuses 8 ein, die durch im Abstand angeordnete
Leisten 9, 10 gebildet sind. Im Bildbetrachtergehäuse
8 ist ein Umlenkspiegel 11 und eine Mattscheibe 12 vorgesehen, deren Abstand so gewählt ist, daß der Diaprojektor 1 behinderungsfrei in das Bildbetrachtergehäuse einbringbar ist. Das Bildbetrachtergehäuse ist
mit einer Durchführungsöffnung 13 versehen, die durch
eine bei 14 angelenkte Klappe 15 verschließbar ist.
Die Klappe 15 ist als Stellfläche für den Diaprojektor nutzbar, wozu die Klappe 15 auf der dem Diaprojektor 1 abgewandten Seite Stützansätze 16 aufweist,
an die sich Fußteile 17 des Diaprojektors 1 anlegen.
Zur Kennzeichnung der Projektionsstellung können die
Kulissennuten 7 mit einer Absetzung 18 versehen sein,
in die Führungszapfen 6 eingreifen.

Durch einen einfachen Verschiebevorgang kann der
Diaprojektor 1 aus der Arbeitsstellung der Figur 2
in das Bildbetrachtergehäuse 8 eingebracht werden.
Zur Fixierung des Diaprojektors 1 im Bildbetrachtergehäuse 8 dient ein Ansatz 19, der gemeinsam mit einer
Anformung 20 den Diaprojektor 1 stützt. Nach dem Öffnen
der Klappe 15 kann durch Anheben des Diaprojektors 1
über den Ansatz 19 der Diaprojektor 1 durch die Durchführungsöffnung 13 aus dem Bildbetrachtergehäuse 8 entnommen werden. Die Kulissennuten 7 sind für den Anhebe-

vorgang des Projektors nach oben geringfügig verlängert.

Das Bildbetrachtergehäuse 8 weist oben eine insbesondere rückseitig offene Griffmulde 21 auf, die den
Transport des Bildbetrachters bzw. von Bildbetrachter
und den in diesem eingeschobenen Diaprojektor erleichtert.

- 1 -

Patentansprüche:

1. Projektionseinrichtung mit einem Diaprojektor und einem Bildbetrachter mit Umlenkspiegel und Mattscheibe, der für die Durchleitung der Projektionsstrahlen eine Durchführungsöffnung aufweist, dadurch gekennzeichnet, daß der Diaprojektor (1) über die Durchführungsöffnung (13) in das Gehäuse (8) des Bildbetrachters (5) einbringbar und die Durchführungsöffnung (13) durch ein Verschlußglied abdeckbar ist.

2. Projektionseinrichtung nach Anspruch 1, dadurch gekennzeichnet, daß das Verschlußglied durch eine am Bildbetrachtergehäuse (8) angelenkte Klappe (15) gebildet und mit dem dem Gelenk abgewandten Ende am Bildbetrachtergehäuse (8) verrastbar ist.

3. Projektionseinrichtung nach Anspruch 1 und 2, dadurch gekennzeichnet, daß die Klappe (15) die Stellfläche für den Diaprojektor bildet.

4. Projektionseinrichtung nach Anspruch 1 bis 3, dadurch gekennzeichnet, daß die Klappe (15) auf der dem Diaprojektor zugewandten Seite Stützansätze (16) für den Diaprojektor (1) aufweist.

5. Projektionseinrichtung nach Anspruch 1, dadurch gekennzeichnet, daß der Diaprojektor (1) mittels Führungszapfen (6) in bildbetrachtergehäusefeste Nuten (7) verschieblich eingreift und abgestützt ist.

6. Projektionseinrichtung nach Anspruch 5, dadurch
gekennzeichnet, daß die Nuten (7) durch am Bildbetrachtergehäuse (8) im parallelen Abstand voneinander
angeformte Leistenpaare (9, 10) gebildet sind.

7. Projektionseinrichtung nach Anspruch 6, dadurch
gekennzeichnet, daß die Leistenpaare (9, 10) an dem
dem Verschlußglied zugenäherten Ende Absetzungen (18)
aufweisen in die der Diaprojektor (1) mit Führungszapfen (6) eingreift.

8. Projektionseinrichtung nach Anspruch 1, dadurch
gekennzeichnet, daß das Bildbetrachtergehäuse (8)
oben eine rückseitig offene Griffmulde (21) aufweist.

Fig.1

Fig. 2

0140305

2/3

0140305

Fig. 3